# EUROPEAN PATENT APPLICATION

(11) **EP 2 229 034 A1**
(43) Date of publication of application: **15.09.2010**
(21) Application number: 09305211.6
(22) Date of filing: 09.03.2009
(51) Int. Cl.: H04W 84/18, H04W 40/38, H04W 40/18, H04W 84/06

(54) **A method for building a mesh communication network using means of transportation as communication nodes**

(71) Applicant: Alcatel Lucent, 75008 Paris (FR)
(72) Inventor: Gloss, Bernd, 70569, Stuttgart (DE); Kühn, Edgar, 70563, Stuttgart (DE)
(74) Representative: Kleinbub, Oliver

(57) **Abstract**

The invention concerns a method for building a mesh communication network comprising means of transportation (A1-A7) as communication nodes, wherein a travel plan calculator (TPC) calculates at least one travel plan for at least one means of transportation (A1-A7) in such a way that each means of transportation (A1-A7) is connected to each further means of transportation (A1-A7) during travel either directly or via one or more means of transportation (A1-A7), and the at least one travel plan is transmitted from the travel plan calculator (TPC) to the respective means of transportation (A1-A7), a travel plan calculator, a means of transportation, a communication network, and a computer program product therefor.

## Description

The invention relates to a method for building a mesh communication network according to the preamble of claim 1, a travel plan calculator according to the preamble of claim 9, a means of transportation according to the preamble of claim 10, a communication network according to the preamble of claim 11, and a computer program product according to the preamble of claim 12.

Aircrafts on transcontinental flights and ships along coast lines might form wireless mesh networks of slowly relative moving mesh nodes e.g. for providing broadband internet access to management systems or passengers by means of internet access via terrestrial or satellite radio transmitters. As has been demonstrated in prototype solutions and some early product solutions, e.g. by Boeing, aircrafts shall be equipped with in-flight entertainment systems with broadband internet access. Some solutions propose that aircrafts on transcontinental flights might form a mesh network with land-based internet gateways.

A reasonable business scenario is that a mesh network operator provides a broadband internet access service for the in-flight-entertainment systems of aircrafts to airlines, i.e. the business case is that a professional operator sells a service to a professional customer. The internet connectivity for individual aircrafts without direct ground connectivity is provided via reachable aircrafts in a multi-hop fashion. The access network backhauling ends at one of the network operator's internet gateways reached via a land-based ground-to-airplane link. The installation of the mesh network operator at each aircraft includes an access system for the in-flight-entertainment system to the mesh network as well as a mesh relay function and gateway relay functions to the ground or to satellites.

Keeping the communication traffic inside the mesh network of aircrafts and relaying it via ground gateways is expected to be the more cost-efficient solution compared to satellite links with limited overall capacities. For this reason, satellite links are considered to be solely used as backups to prevent disconnections of single aircrafts or small groups of aircrafts. In each case, the mesh solution seeks to reduce network outage of nodes or parts of the mesh network and seeks to avoid traffic bottlenecks.

Up to an upper limit for the distance between two aircrafts of about 400 km, a communication connection in the range of 50 Mbit/s can be established. Thus, this kind of mesh networks may suffer from temporary disconnections of fractions of the mesh network owing to a temporary node distribution with a too high distance between mesh nodes. A solution to avoid such temporary disconnections could be to increase the number of radio transmitters providing internet access to aircrafts or ships serving as mesh nodes or to provide satellite backup links to aircrafts or ships serving as mesh nodes.

However, increasing the number of radio transmitters providing internet access or providing satellite backup links increases both capital expenditure and operational expenditure.

The object of the invention is thus to propose a reliable, cost-effective and flexible method for building a wireless mesh communication network using means of transportation as communication nodes.

This object is achieved by a method according to the teaching of claim 1, a travel plan calculator according to the teaching of claim 9, a means of transportation according to the teaching of claim 10, a communication network according to the teaching of claim 11, and a computer program product according to the teaching of claim 12.

As aircrafts or ships follow pre-planned paths, their movement can be influenced by modifications to the flight schedules by slightly adapting departure or arrival times, the chosen routes or travel speeds. Thus, the main idea of the invention is the introduction of a planning tool for calculation or adaptation of travel plans of the moving mesh nodes, as e.g. aircrafts or ships, in order to maintain or increase the mesh network performance.

According to the invention, a travel plan calculator calculates at least one travel plan for at least one means of transportation, as e.g. an aircraft or a ship, in such a way that each means of transportation is connected to each further means of transportation during travel either directly or via one or more means of transportation. Then the at least one travel plan is transmitted from the travel plan calculator to the respective means of transportation, and said respective means of transportation sets its flight parameters according to said at least one travel plan.

Further developments of the invention can be gathered from the dependent claims and the following description.

In the following the invention will be explained further making reference to the attached drawings.

Fig. 1 schematically shows a communication network with aircrafts as communication nodes and a travel plan calculator for calculation of travel plans before beginning of the travel according to the invention.

Fig. 2 schematically shows a communication network with aircrafts as communication nodes and a travel plan calculator for adaptation of travel plans during travel according to the invention.

Fig. 3 schematically shows the basic working principle of a mesh-aware flight plan controller for calculation of travel plans according to the invention.

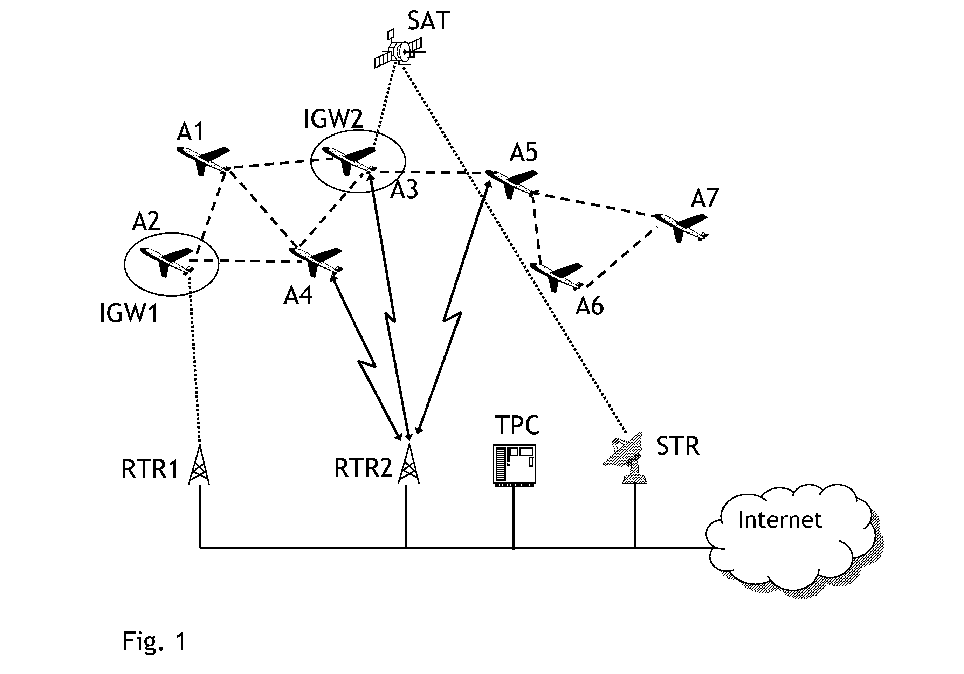

The principle structure of a communication network with aircrafts as communication nodes of a mesh communication network and a travel plan calculator for calculation of travel plans is shown in fig. 1.

The communication network comprises seven aircrafts A1-A7 which build the mesh communication network, with two aircrafts A2 and A3 serving as internet gateways IGW1 and IGW2. Furthermore, the communication network comprises two radio transmitters RTR1 and RTR2, a satellite transmitter STR, a satellite SAT and a travel plan calculator TPC. The travel plan calculator TPC is basically a computer, as e.g. a personal computer or a server. The two radio transmitters RTR1 and RTR2 and the satellite transmitter STR are terrestrial transmitters.

Dashed lines between the aircrafts indicate wireless communication connections between various aircrafts within the mesh communication network. It can be seen in fig. 1 that each aircraft A1-A7 has at least one communication connection to another aircraft A1-A7.

The two radio transmitters RTR1 and RTR2, the satellite transmitter STR, the satellite SAT and the travel plan calculator TPC are all connected to the internet. Thus, the two radio transmitters RTR1 and RTR2, the satellite transmitter STR, the satellite SAT and the travel plan calculator TPC are all connected to each other via the internet, which is indicated by solid lines in fig. 1.

The aircraft A2 serves as the first internet gateway IGW1 and is connected via a wireless internet protocol connection to the first radio transmitter RTR1.

The aircraft A3 serves as the second internet gateway IGW2 and is connected via a wireless internet protocol connection to the satellite SAT. The satellite SAT is in turn connected to the satellite transmitter STR.

However, to have two internet protocol connections via the first radio transmitter RTR1 and the satellite transmitter STR as depicted in fig. 1 is only an example of an embodiment of the invention. In further embodiments of the invention, one or more internet protocol connections via terrestrial radio transmitters or via satellites and terrestrial satellite transmitters are established to connect the mesh communication network to the internet.

The wireless internet protocol connections between the aircraft A2 and the first radio transmitter RTR1 and between the aircraft A3 and the satellite transmitter STR via the satellite SAT are indicated by dotted lines in fig. 1.

Furthermore, the aircrafts A1-A7 are connected via aeronautical frequencies to terrestrial radio transmitters e.g. for flying on autopilot or to get into contact with air traffic controllers in a tower. In fig. 1, said connections are exemplarily depicted for the connections between the aircrafts A3-A5 and the second radio transmitter RTR2 by flashes.

According to one aspect of the invention, the usage of a travel plan calculator TPC for setting up or adapting the schedules and movement plans of individual moving mesh nodes, as e.g. aircrafts or ships, in order to optimize mesh network capacity or at least in order to prevent disconnections of subsets of mesh nodes is proposed. The most important technical aim of the calculation of the travel plans in terms of mesh network properties is assuring the existence of a sufficient number of mesh links between the mesh nodes.

In an embodiment of the invention, the density of the mesh nodes is limited to a reasonable level in order to limit the interference between mesh nodes.

A travel plan which has been calculated according to the invention before beginning of the travel of the respective means of transportation comprises e.g. departure and arrival times, travelling speeds and waypoints. A travel plan which is calculated according to the invention during travel of the respective means of transportation comprises e.g. only adapted travelling speeds and an adapted arrival time.

For optimizing the travel schedules or movement plans of moving mesh nodes, the travel plan calculator takes at least one of the following groups of parameters into account:
1. The first group of parameters are initial travel schedules and movement capabilities of mesh nodes, which are summarized as mobility parameters. Mobility parameters of mesh nodes are anticipated departure and arrival times including allowable deviations as well as further parameters like required waypoints, maximum and minimum possible speeds of the moving mesh nodes, costs for moving at certain speeds, etc.
2. The second group of parameters are represented by so-called communication traffic matrices. Said communication traffic matrices comprise the required access capacities, as e.g. required communication bandwidth, of the mesh nodes, e.g. as agreed between a mesh network operator and airlines for the broadband internet connectivity of aircrafts.
3. The third group of parameters are capabilities and properties of wireless mesh links between the mesh nodes. The wireless mesh communication network is built on top of point-to-point or point-to-multipoint wireless links. Said wireless links have several properties, e.g. acceptable signal to interference and noise ratios (SINR), maximum allowed distances, used MAC protocols (MAC = media access control), etc. Furthermore, different link types, e.g. links between aircrafts A1-A7, links between aircrafts and ground, as e.g. between the aircraft A2 and the first radio transmitter RTR1, and links between aircrafts and satellites, as e.g. between the aircraft A3 and the satellite SAT have to be respected.
4. The fourth group of parameters are mesh traffic placement algorithms. Mesh traffic placement algorithms are the algorithms used in the real mesh network for placing traffic flows on mesh links. This comprises routing, capacity handling, and admission control schemes.
5. The fifth group of parameters are positions of mesh nodes and movement vectors of the mesh nodes as determined from navigation systems or GPS devices. The positions and the movement vectors can be determined regularly or from time to time. The positions and the movement vectors are above all used for the calculation of travel plans during travels.

As an example, the travel plan calculator can calculate travel plans for the mesh nodes respecting the maximum distance between two mesh nodes above which no connection with at least the minimum required communication bandwidth is possible and also respecting the allowed range of departure and arrival times and the allowed range of travelling speeds.

In the embodiment of the invention depicted in fig. 1, the travel plans for the aircrafts A1-A7 have been calculated by the travel plan calculator TPC before beginning of the travels of the aircrafts A1-A7, and the travel plans have been transmitted e.g. by internet protocol traffic via the radio transmitter RTR1 and further radio transmitters not depicted in fig. 1 to the respective aircraft before beginning of the travel. Alternatively, the travel plans can also be transmitted via private networks not depicted in fig. 1 from the travel plan calculator TPC to different airlines and further to the respective aircraft before beginning of the travel. If all aircrafts A1-A7 fly according to the travel plans, all aircrafts A1-A7 are connected either to the aircraft A2 or to the aircraft A3 which serve as internet gateway IGW1 and IGW2 respectively.

The mesh communication network comprising the aircrafts A1-A7 in fig. 1 is a snapshot at a certain point in time during the travels of the aircrafts A1-A7. It can be seen that all aircrafts A1-A7 are connected by one or more communication connection to the aircraft A2 and to the aircraft A3 which serve as internet gateway IGW1 and IGW2 respectively. In other words, all aircrafts A1-A7 are connected to the internet as this has been intended by the calculation of the travel plans. The internet connection to the mesh communication network is either provided via the first radio transmitter RTR1 and the aircraft A2, or via the satellite transmitter STR, the satellite SAT and the aircraft A3.

In another embodiment of the invention, the travel plan calculator is not connected to the first radio transmitter RTR1 and to the satellite transmitter STR via an internet connection, but via a proprietary communication connection under control of the flight control which is not accessible via the internet. Thus, the travel plan calculator is save from attacks via the internet. The proprietary communication connection may be a separate network or may be a virtual private network which is established on an existing network which is used for internet connections.

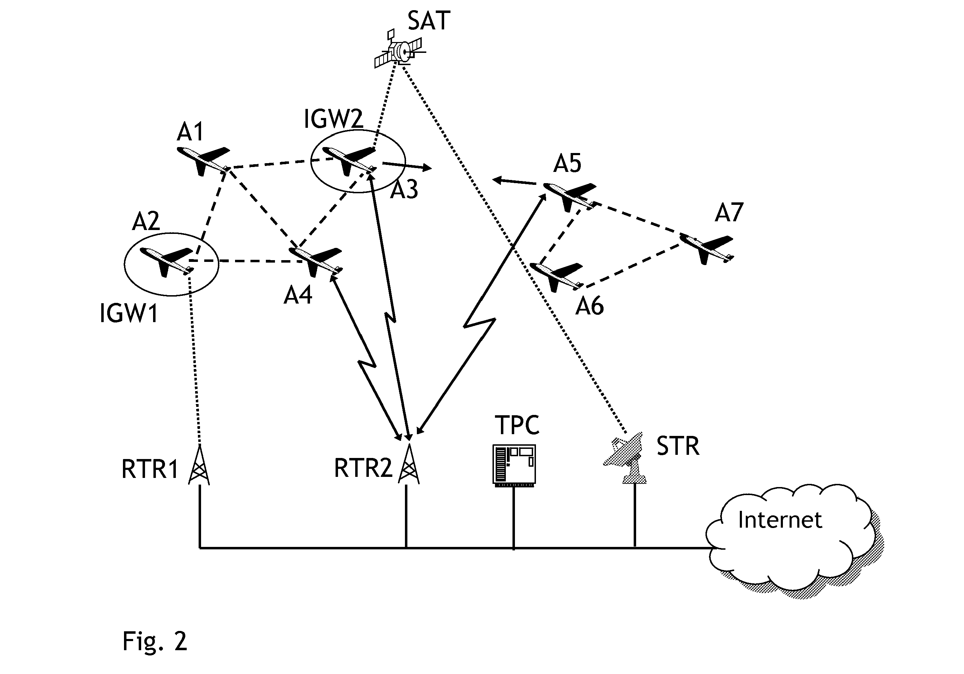

The principle structure of a communication network with aircrafts A1-A7 as communication nodes of a mesh communication network and a travel plan calculator for adaptation of travel plans during travel according to the invention is shown in fig. 2.

The adaptation of travel plans during travel may become necessary if the travel plans of the aircrafts A1-A7 at the beginning of the travels have not been adapted to build a mesh communication network, or if aircrafts had to deviate from the predetermined travel plans. Alternatively, the adaptation of travel plans during travel may be performed regularly, e.g. every five minutes, or quasi-continuously, i.e. as fast as possible, in order to anticipate possible disconnections of aircrafts from the mesh communication network and to take appropriate measures, i.e. to adapt travel plans, to avoid the disconnections.

The structure and functionality of the communication network in fig. 2 is similar to the structure and functionality of the communication network depicted in fig. 1 and described above.

The difference compared to the communication network depicted in fig. 1 is that the aircrafts A5-A7 are connected among each other, but are disconnected from the mesh communication network comprising the aircrafts A1-A4. The mesh communication network is connected to the internet via the aircrafts A2 and A3, which serve as internet gateways IGW1 and IGW2 respectively.

If during travel of the aircrafts A1-A7, it is detected that the aircrafts A5-A7 are disconnected from the mesh communication network, e.g. because it is detected that the distance between the aircrafts A3 and A5 is above a critical threshold or simply because it is detected e.g. in the aircrafts A5-A7 that the communication between the aircrafts A3 and A5 is lost, then the calculation of a travel plan for at least one aircraft is triggered in the travel plan calculator TPC, e.g. by means of sending a trigger signal from the aircraft A3 or A5 to the travel plan calculator TPC via the aircraft A3, the satellite SAT, and the satellite transceiver STR, or via the aircraft A2 and the first radio transceiver RTR1.

Alternatively, the calculation of the travel plan for the at least one aircraft is directly triggered in the travel plan calculator TPC by evaluation of the positions of the aircrafts A1-A7.

In order to enable the travel plan calculator TPC to directly detect a disconnection of one or more aircrafts from the mesh network, and in order to enable the travel plan calculator TPC to calculate adapted travel plans which result in all aircrafts A1-A7 being connected to the mesh communication network, the travel plan calculator must regularly or from time to time be updated with the positions of the aircrafts. The aircrafts A1-A7 send their positions and preferably also their movement vectors to the travel plan calculator TPC via the aircraft A2 and the first radio transmitter RTR1, via the aircraft A3, the satellite SAT, and the satellite transceiver STR, or by means of aeronautical frequencies via the second radio transmitter RTR2.

In the example depicted in fig. 2, the travel plans for the aircrafts A3 and A5 are adapted by the travel plan calculator TPC during travels of the aircrafts A3 and A5, and the travel plans are transmitted e.g. by internet protocol traffic via the radio transmitter RTR1 or via the satellite transmitter STR and the satellite SAT to the respective aircraft A3 and A5 during travel. The adaptations of the travel plans for the aircrafts A3 and A5 result in a reduction of the distance between the aircrafts A3 and A5 and to a connection between the aircrafts A3 and A5. If now all aircrafts A1-A7 fly according to the travel plans, all aircrafts A1-A7 are connected either to the aircraft A2 or to the aircraft A3 which serve as internet gateway IGW1 and IGW2 respectively.

As an alternative to the adaptation of travel plans after detection that the aircrafts A5-A7 are disconnected from the mesh communication network, in order to connect the aircrafts A5-A7 to the internet, a wireless internet protocol connection between the aircraft A5 and the satellite transceiver STR via the satellite SAT is established.

The result of the travel plan calculation process performed in the travel plan calculator TPC is a travel schedule with individual movement plans which is adapted to an appropriate mesh communication network for the whole set of mesh nodes. The schemas, i.e. the data representation, of the optimized travel schedule and the individual movement plans are identical as if they were created without a mesh-aware optimization tool, but will have enhanced properties for the mesh network communications.

The placement of communication traffic inside the mesh communication network is done in a first stage by mesh communication network traffic placement algorithms depending on the current communication traffic and the current position of mesh nodes. Where bottlenecks occur or when the wireless connectivity ends owing to the distance between mesh nodes, the mesh internal traffic placement algorithms can be supported by an optimization tool for flight schedules, as the above described travel plan calculation process performed in the travel plan calculator, assuring that, over the time, the aircrafts participating in the mesh communication network, are always well distributed. This can be done by slightly influencing the individual movement plans of aircrafts assuring not too much proximity and not too large distances between aircrafts.

The setting of appropriate positions of the mesh nodes is done, according to the invention, by influencing the departure and arrival times exploiting allowable deviations, and by exploiting movement capabilities of the aircrafts, like e.g. maximum and minimum speed, possible routes, costs for travelling at different speeds, etc. Service level agreements between the mesh communication network operator and the airlines, as e.g. guaranteed access bandwidths for the in-flight-entertainment system of an aircraft, are considered. Furthermore, properties of the traffic placement algorithm, which is applied by mesh network, is taken into consideration.

The result of the planning tool, i.e. planning process, is an appropriate flight schedule and movement plan, i.e. travel plan, for individual aircrafts. These travel plans are used by the airlines, airports, pilots, and auto-pilots, in the same way as they are used today without a mesh communication network optimization.

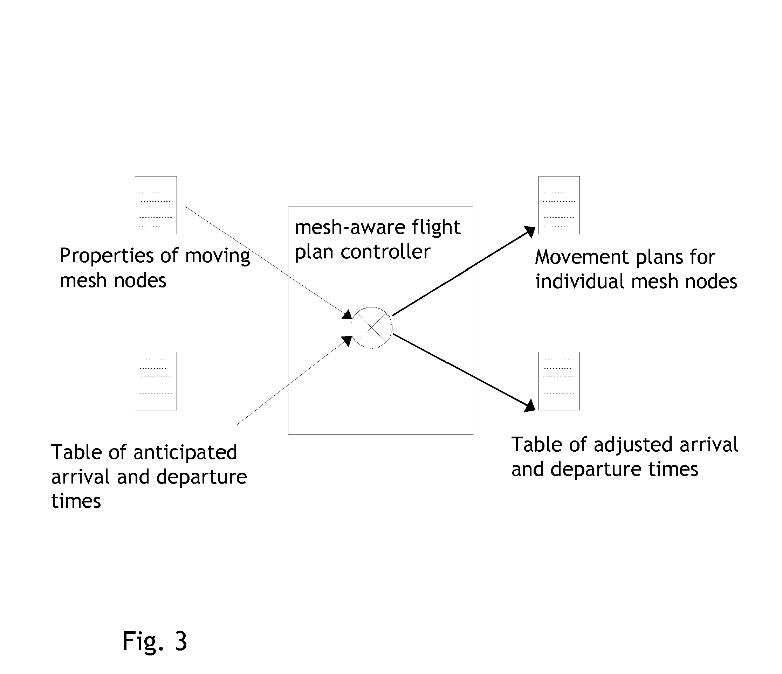

Fig. 3 shows an example tool-chain of a mesh-aware flight plan controller for calculation of travel plans according to the invention. The mesh-aware flight plan controller gets as an input initial travel schedules of aircrafts comprising anticipated arrival and departure times and descriptions of the mobility capabilities of the individual mesh nodes, i.e. aircrafts. The mesh-aware flight plan controller processes the input together for improving the mesh communication network communication properties. The processing results in an adjusted table of travel schedules, i.e. in adjusted arrival and departure times of the aircrafts, and in individual movement plans for the mesh nodes, i.e. aircrafts.

The mesh-aware flight plan controller can be implemented as hardware or software e.g. in the travel plan calculator TPC described above.

The above-described optimization process of the mesh-aware flight plan controller for travel schedules and movement plans can either be a one-time planning process for a certain period of time, e.g. one day, or be incremental based on an existing set of scheduled flights.

The optimization tool, i.e. the mesh-aware flight plan controller, can be a dedicated tool used after a standard setup tool for travel schedules and movement plans, i.e. travel plans, or be integrated in the standard setup tool.

Similar markets for operating mesh communication networks between controllable moving mesh nodes are ocean ships at ocean lanes and joint ship and aircraft mesh networks exploiting a higher mesh node density. In these markets, similar travel optimization tools can be applied.

## Claims

1. A method for building a mesh communication network comprising means of transportation (A1-A7) as communication nodes, **characterized in, that**
• a travel plan calculator (TPC) calculates at least one travel plan for at least one means of transportation (A1-A7) in such a way that each means of transportation (A1-A7) is connected to each further means of transportation (A1-A7) during travel either directly or via one or more means of transportation (A1-A7),
• and the at least one travel plan is transmitted from the travel plan calculator (TPC) to the respective means of transportation (A1-A7).

2. A method according to claim 1, **characterized in, that** the at least one travel plan is calculated and transmitted before beginning of the travel of the respective means of transportation (A1-A7).

3. A method according to claim 1, **characterized in, that** the at least one travel plan is calculated if at least one means of transportation (A1-A7) is not connected to the mesh communication network.

4. A method according to claim 1, **characterized in, that** the at least one travel plan is calculated in such a way, that the interference between the means of transportation (A1-A7) is below a predefined threshold.

5. A method according to claim 1, **characterized in, that** the at least one travel plan is calculated based on at least one of the group of mobility parameters of the communication nodes, required access capacities of the communication nodes, capabilities and properties of the radio links of the communication nodes, and mesh traffic placement algorithms.

6. A method according to claim 1, **characterized in, that** the at least one travel plan is transmitted from the travel plan calculator (TPC) to the respective means of transportation (A1-A7) by internet protocol traffic.

7. A method according to claim 6, **characterized in, that** the at least one travel plan is transmitted from the travel plan calculator (TPC) to the respective means of transportation (A1-A7) via at least one of the group of a radio transmitter (RTR1) and a satellite transmitter (STR) connected to a satellite (SAT).

8. A method according to claim 1, **characterized in, that** the means of transportation (A1-A7) are one of the group of aircrafts and ships.

9. A travel plan calculator (TPC) for building a mesh communication network comprising means of transportation (A1-A7) as communication nodes, **characterized in, that** the travel plan calculator (TPC) comprises at least one processing means adapted to
• calculate travel plans for at least one means of transportation (A1-A7) in such a way that each means of transportation (A1-A7) is connected to each further means of transportation (A1-A7) during travel either directly or via one or more means of transportation (A1-A7),
• and transmit said travel plans to the respective means of transportation (A1-A7).

10. A means of transportation (A1-A7) which serves as a communication node in a mesh communication network, **characterized in, that** said means of transportation (A1-A7) comprises at least one processing means adapted to
• receive a travel plan via an air interface,
• and set its flight parameters according to the travel plan.

11. A communication network comprising means of transportation (A1-A7) as communication nodes and a travel plan calculator (TPC) **characterized in, that**
• the travel plan calculator (TPC) comprises at least one processing means adapted to calculate travel plans for at least one means of transportation (A1-A7) in such a way that each means of transportation (A1-A7) is connected to each further means of transportation (A1-A7) during travel either directly or via one or more means of transportation (A1-A7), and to transmit said travel plans to the respective means of transportation (A1-A7),
• and each of said means of transportation (A1-A7) comprises at least one processing means adapted to receive travel plans via an air interface, and to set its flight parameters according to the travel plans.

12. A computer program product comprising computer-executable instructions for performing a method for building a mesh communication network comprising means of transportation (A1-A7) as communication nodes when the program is run on a computer (TPC), the method comprising the steps of
• calculating at least one travel plan for at least one means of transportation (A1-A7) in such a way that each means of transportation (A1-A7) is connected to each further means of transportation (A1-A7) during travel either directly or via one or more means of transportation (A1-A7),
• and transmitting the at least one travel plan to the respective means of transportation (A1-A7).

## Amended claims

### Amended claims in accordance with Rule 137(2) EPC.

**1.** A method for building a mesh communication network comprising means of transportation (A1-A7) as communication nodes, **characterized in, that**
• travel plan calculator (TPC) calculates at least one travel plan for at least one means of transportation (A1-A7) in such a way that each means of transportation (A1-A7) is connected to each further means of transportation (A1-A7) during travel either directly or via one or more means of transportation (A1-A7), said at least one travel plan comprising at least one of the group of departure and arrival times, travelling speeds, and waypoints,
• the at least one travel plan is transmitted from the travel plan calculator (TPC) to the respective means of transportation (A1-A7),
• the respective means of transportation (A1-A7) receive said at least one travel plan which allows that each means of transportation (A1-A7) is connected to each further means of transportation (A1-A7) during travel either directly or via one or more means of transportation (A1-A7),
• and the respective means of transportation (A1-A7) set their flight parameters according to said at least one travel plan and follow pre-planned paths.

**9.** A travel plan calculator (TPC) for building a mesh communication network comprising means of transportation (A1-A7) as communication nodes, **characterized in, that** the travel plan calculator (TPC) comprises at least one processing means adapted to
• calculate travel plans for at least one means of transportation (A1-A7) in such a way that each means of transportation (A1-A7) is connected to each further means of transportation (A1-A7) during travel either directly or via one or more means of transportation (A1-A7), said travel plans comprising at least one of the group of departure and arrival times, travelling speeds, and waypoints,
• and transmit said travel plans to the respective means of transportation (A1-A7) indicating to the respective means of transportation (A1-A7) to set their flight parameters according to said travel plans which allow that each means of transportation (A1-A7) is connected to each further means of transportation (A1-A7) during travel either directly or via one or more means of transportation (A1-A7), and indicating to the respective means of transportation (A1-A7) to follow pre-planned paths.

**10.** A means of transportation (A1-A7) which serves as a communication node in a mesh communication network, **characterized in, that** said means of transportation (A1-A7) comprises at least one processing means adapted to
• receive a travel plan via an air interface which allows that said means of transportation (A1-A7) is connected to each further means of transportation (A1-A7) during travel either directly or via one or more means of transportation (A1-A7), said travel plan comprising at least one of the group of departure and arrival times, travelling speeds, and waypoints,
• and set its flight parameters according to the travel plan.

**11.** A communication network comprising means of transportation (A1-A7) as communication nodes and a travel plan calculator (TPC) **characterized in, that**
• the travel plan calculator (TPC) comprises at least one processing means adapted to calculate travel plans for at least one means of transportation (A1-A7) in such a way that each means of transportation (A1-A7) is connected to each further means of transportation (A1-A7) during travel either directly or via one or more means of transportation (A1-A7), said travel plans comprising at least one of the group of departure and arrival times, travelling speeds, and waypoints, and to transmit said travel plans to the respective means of transportation (A1-A7) indicating to the respective means of transportation (A1-A7) to set their flight parameters according to said travel plans which allow that each means of transportation (A1-A7) is connected to each further means of transportation (A1-A7) during travel either directly or via one or more means of transportation (A1-A7), and indicating to the respective means of transportation (A1-A7) to follow pre-planned paths,
• and each of said means of transportation (A1-A7) comprises at least one processing means adapted to receive travel plans via an air interface which allows that each of said means of transportation (A1-A7) is connected to each further means of transportation (A1-A7) during travel either directly or via one or more means of transportation (A1-A7), and to set its flight parameters according to the travel plans.

**12.** A computer program product comprising computer-executable instructions for performing a method for building a mesh communication network comprising means of transportation (A1-A7) as communication nodes when the program is run on a computer (TPC), the method comprising the steps of
• calculating at least one travel plan for at least one means of transportation (A1-A7) in such a way that each means of transportation (A1-A7) is connected to each further means of transportation (A1-A7) during travel either directly or via one or more means of transportation (A1-A7), said at least one travel plan comprising at least one of the group of departure and arrival times, travelling speeds, and waypoints,
• and transmitting the at least one travel plan to the respective means of transportation (A1-A7) indicating to the respective means of transportation (A1-A7) to set their flight parameters according to said at least one travel plan which allows that each means of transportation (A1-A7) is connected to each further means of transportation (A1-A7) during travel either directly or via one or more means of transportation (A1-A7), and indicating to the respective means of transportation (A1-A7) to follow pre-planned paths.
